**Europäisches Patentamt**

**European Patent Office**

**Office européen des brevets**

(19)

(11) Veröffentlichungsnummer: **0 193 158**
**A1**

(12) # EUROPÄISCHE PATENTANMELDUNG

(21) Anmeldenummer: **86102395.0**

(22) Anmeldetag: **24.02.86**

(51) Int. Cl.⁴: **G 01 F 25/00**
**//B01L3/02, B67D5/08**

(30) Priorität: **28.02.85 DE 3507131**

(43) Veröffentlichungstag der Anmeldung:
**03.09.86 Patentblatt 86/36**

(84) Benannte Vertragsstaaten:
**AT BE CH DE FR GB IT LI LU NL SE**

(71) Anmelder: **RLT Ruhrtal Labor-Technik Vertriebs GmbH**
**Johanna-Baltz-Strasse 28**
**D-5760 Arnsberg 2(DE)**

(72) Erfinder: **Willms, Joachim**
**Düsseldorfer Strasse 107**
**D-5657 Haan(DE)**

(74) Vertreter: **Patentanwälte Müller-Boré, Deufel, Schön,**
**Hertel, Lewald, Otto**
**Postfach 26 02 47 Isartorplatz 6**
**D-8000 München 26(DE)**

(54) **Vorrichtung und Verfahren zur Überprüfung der von einem Dispenser abgegebenen Flüssigkeitsmenge.**

(57) Zur Überprüfung der von einem Dispenser (12) abgegebenen Flüssigkeitsmenge ist ein Ständer (30) vorgesehen, der eine Skalenplatte (34) aufweist, an welcher Glasröhrchen (42, 44, 46) in Klemmen (36, 38, 40) verschiebbar gehalten sind. Die von einem Dispenser (12) durch eine erste Betätigung abgegebene Flüssigkeitsmenge wird über die Ausstoßkanüle (26) und einen Schlauch (60) dem Röhrchen (46) zugeführt. Der Meniskus (62) der in dem Röhrchen (46) enthaltenen Flüssigkeit (64) wird auf den Nullpunkt der Skala (52) eingestellt. Danach erfolgt eine weitere Betätigung des Dispensers (12) und durch Ablesen der Höhe des neuen Meniskus (66) an der Skala (52) ergibt sich die von dem Dispenser (12) bei einer Betätigung abgegebene Flüssigkeitsmenge.

EP 0 193 158 A1

./...

Fig. 1

Die Erfindung betrifft eine Vorrichtung und ein Verfahren zur Überprüfung der von einem Dispenser abgegebenen Flüssigkeitsmenge.

Dispenser werden insbesondere im Laborbetrieb verwendet. Sie dienen als kolbenbetriebener Stech- oder Saugheber zum Ansaugen von Flüssigkeiten. Der Kolbenhub ist bei derartigen Dispensern so ausgelegt, daß immer dieselbe Menge angesaugt und abgegeben wird. Während des normalen Gebrauchs erfolgt durch die Laborantin keine Überprüfung der Menge, die mit einem derartigen Dispenser abgegeben wird. Da im Laufe der Zeit durch Verschleiß und/oder Verschmutzung eine Veränderung in dem aufgenommenen Volumen von beispielsweise 0,5 ml bis 10,00 ml eintreten kann, werden in einem normalen Labor eingesetzte Dispenser zu einer Überprüfungsstelle eingeschickt, in welcher sie durch Nachwägung der aufgenommenen Menge überprüft werden. Eine derartige Vorgehensweise ist aber sehr unpraktisch, da die Dispenser dazu aus dem Labor entfernt werden müssen; sie sind dann für den Gebrauch nicht vorhanden und die Überprüfung verursacht Kosten.

Der Erfindung liegt die Aufgabe zugrunde, eine Vorrichtung und ein Verfahren zu schaffen, mit welchen eine einfache und exakte Überprüfung von Dispensern in dem Labor, in dem sie verwendet werden, möglich ist.

Die Lösung dieser Aufgabe ist erfindungsgemäß gekennzeichnet durch einen mit Skalen versehenen Ständer und wenigstens einem an dem Ständer verschiebbar angeordneten Glasröhrchen.

Das erfindungsgemäße Verfahren ist dadurch gekennzeichnet, daß die Ausstoßkanüle des Dispensers mit der Öffnung eines Glasröhrchens verbunden wird, daß durch Betätigung des Dispensers soviel Flüssigkeit in das Glasröhrchen gedrückt wird, bis sich im unteren Bereich des Glasröhrchens ein Meniskus einstellt, daß der Meniskus der Flüssigkeit durch Verschieben des Glasröhrchens an dem Ständer auf den Nullpunkt einer zugehörigen Skala eingestellt wird, daß der Dispenser erneut betätigt wird und daß die Höhe des sich danach ergebenden Meniskus der Flüssigkeit in dem Glasröhrchen an der Skala abgelesen wird.

Zur Halterung des Glasröhrchens ist in Ausgestaltung der Erfindung an dem Ständer wenigstens eine Klemme angeordnet, welche ermöglicht, daß das Glasröhrchen zur Einstellung des Meniskus verschoben werden kann.

Um mit einer Vorrichtung Dispenser mit den gängigsten Volumina 0,5 bis 10,0 ml überprüfen zu können, sind vorzugsweise an dem Ständer drei Glasröhrchen unterschiedlichen Durchmessers über Klemmen für die Volumina 0,5 bis 2,0 ml, 2,0 bis 5,0 ml und 5,0 bis 10,0 ml befestigt.

Um einen verlustfreien Übertrag der von dem Dispenser abgegebenen Flüssigkeitsmenge in ein Glasröhrchen zu ermöglichen, ist das Glasröhrchen vorzugsweise am unteren Ende verjüngt ausgebildet, so daß ein Schlauch auf dieses Ende aufgesteckt werden kann, der mit dem anderen Ende an der Ausstoßkanüle des Dispensers angeordnet ist.

Ein Ausführungsbeispiel der Erfindung wird anhand der Zeichnung näher erläutert. Es zeigen:

Fig. 1    eine Prüfanordnung in Vorderansicht,
Fig. 2    eine Ansicht in Richtung Pfeil II von Fig. 1 und
Fig. 3    eine Draufsicht auf die Vorrichtung nach Fig. 1.

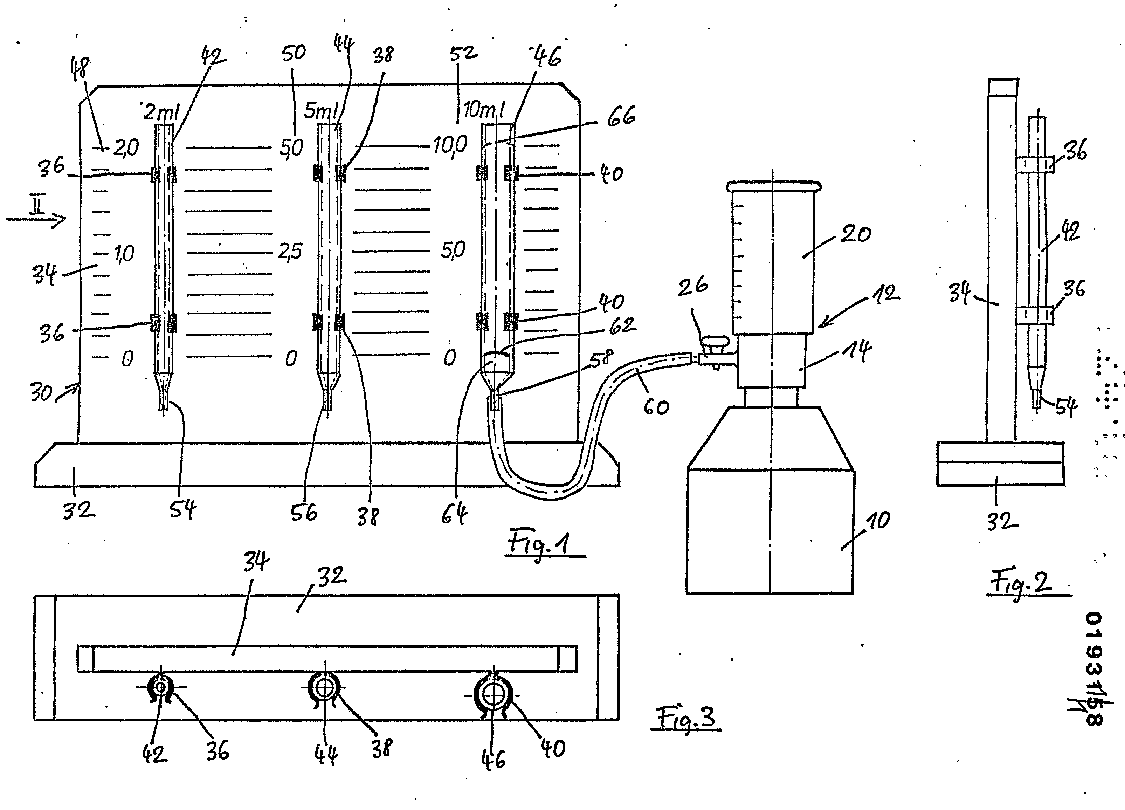

In Fig. 1 ist ein Behälter 10 dargestellt, auf welchem ein Dispenser 12 befestigt ist. Der Dispenser 12 weist einen Ventilblock 14 auf, der mit einem Flaschengewinde zum Aufschrauben auf dem Behälter 10 ausgebildet ist. An dem Ventilblock 14 ist ein Zylinder angeordnet, in welchem ein Kolben, der mit einer Zylinderhülse 20 verbunden ist, verschiebbar ist. Der Ventilblock 14 ist mit einem Ansaugrohr

-3-

verbunden, an dessen oberem Ende ein Ventil angeordnet ist und dessen unteres Ende in die Flüssigkeit in dem Behälter 10 eingetaucht ist. Die von dem Kolben durch das Ansaugrohr angesaugte Flüssigkeit, die in dem Zylinder enthalten ist, wird über eine Ausstoßkanüle 26 abgegeben.

Die Vorrichtung zur Überprüfung der von dem Dispenser 12 aufgenommenen und über die Ausstoßkanüle 26 abgegebenen Flüssigkeitsmenge weist einen Ständer 30 auf, der aus einem Fuß 32 und einer Skalenplatte 34 besteht. An der Skalenplatte 34 ist eine Reihe von Klemmen 36, 38, 40 angeordnet. Mit Hilfe der Klemmen 36 wird ein an beiden Enden offenen Glasröhrchen 42 gehalten, das beispielsweise zur Überprüfung einer Menge bis 2,0 ml geeignet ist. Ein von den Klemmen 38 gehaltenes Glasröhrchen 44 ist zur Aufnahme einer Menge bis zu 5,0 ml gedacht und ein Glasröhrchen 46, das von den Klemmen 40 gehalten wird, kann eine Flüssigkeitsmenge bis zu 10,0 ml aufnehmen. Jedem Glasröhrchen 42, 44, 46 ist eine Skala 48, 50 und 52 zugeordnet. Die Glasröhrchen 42, 44 und 46 weisen an ihrem unteren Ende Verjüngungen 54, 56, 58 auf.

Wenn die von dem Dispenser aufgenommene und abzugebende Flüssigkeit überprüft werden soll, wird die Ausstoßkanüle 26 über einen Schlauch 60 mit einem der Glasröhrchen 42, 44, 46 verbunden, im gezeigten Ausführungsbeispiel mit dem Glasröhrchen 46, wenn der Dispenser eine Flüssigkeitsmenge von 10,0 ml abgeben soll. Durch Betätigung des Dispenser 12 wird die im Dispenser angezeigte Flüssigkeit durch die Ausstoßkanüle 26 und den Schlauch 60 in das Glasröhrchen 46 gedrückt. Das Glasröhrchen 46 wird dann in den Klemmen 36 soweit verschoben, bis der Meniskus 62 der in dem Röhrchen 46 enthaltenen Flüssigkeit 64 auf den Nullpunkt der Skala 52 eingestellt ist. Danach wird der Dispenser 12 erneut betätigt und die abgegebene Flüssigkeitsmenge wird in das Glasröhrchen 46 gedrückt, wodurch der Meniskus 66 die obere angedeutete Stellung einnimmt. Auf der Skala 52 kann dann abgelesen werden, wieviel Flüssigkeit der Dispenser bei einem Betätigungshub abgibt.

Der größte Teil der im Handel erhältlichen Dispenser oder Dosierer ist variabel einstellbar, beispielsweise von 0,4 ml bis 2,0 ml, 1,0 ml bis 5,0 ml oder 2,0 ml bis 10,0 ml. Mit einem derartigen Dispenser ist es möglich, beispielsweise 4,2 ml durch Begrenzung des Kolbenhubes einzustellen.

Durch die erfindungsgemäße Vorrichtung und das erfindungsgemäße Verfahren ist es im Labor ohne großen Aufwand und ohne Kosten möglich, die abgegebenen Flüssigkeitsmengen derartiger Dispenser zu überprüfen.

-1-

Patentansprüche

Vorrichtung und Verfahren zur Überprüfung der von einem Dispenser abgegebenen Flüssigkeitsmenge

1. Vorrichtung zur Überprüfung der von einem Dispenser abgegebenen Flüssigkeitsmenge, g e k e n n z e i c h n e t durch einen mit Skalen (48, 50, 52) versehenen Ständer (30, 32, 34) und wenigstens einem an dem Ständer (34) verschiebbar angeordneten Glasröhrchen (42, 44, 46).

2. Vorrichtung nach Anspruch 1, dadurch g e k e n n - z e i c h n e t , daß an dem Ständer (34) wenigstens eine Klemme (36, 38, 40) zur Halterung des Glasröhrchens (42, 44, 46) angeordnet ist.

3. Vorrichtung nach Anspruch 1 oder 2, dadurch g e k e n n - z e i c h n e t , daß an dem Ständer drei beidseitig offene Glasröhrchen (42, 44, 46) unterschiedlichen Durchmessers über Klemmen (36, 38, 40) befestigt sind.

4. Vorrichtung nach einem der Ansprüche 1 bis 3, dadurch g e k e n n z e i c h n e t , daß die Glasröhrchen (42, 44, 46) am unteren Ende verjüngt sind.

5. Verfahren zur Überprüfung der von einem Dispenser abgegebenen Flüssigkeitsmenge mit einer Vorrichtung nach den Ansprüchen 1 bis 4, dadurch g e k e n n - z e i c h n e t , daß die Ausstoßkanüle des Dispensers mit der Öffnung eines Glasröhrchens verbunden wird, daß durch Betätigung des Dispensers Flüssigkeit in das Glasröhrchen gedrückt wird, daß der Meniskus der Flüssigkeit durch Verschieben des Glasröhrchens an dem Ständer auf den Nullpunkt einer zugehörigen Skala eingestellt wird, daß der Dispenser erneut betätigt wird und daß die Höhe des sich danach ergebenden Meniskus der Flüssigkeit in dem Glasröhrchen an der Skala abgelesen wird.

0193158

Fig.1

Fig.2

Fig.3

Europäisches
Patentamt

**EUROPÄISCHER RECHERCHENBERICHT**

## EINSCHLÄGIGE DOKUMENTE

EP 86102395.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 136 112 (GRÜNBECK)<br>* Fig. 1; Seite 4, Zeilen 5-27 *<br><br>-- | 1,4,5 | G 01 F 25/00<br>// B 01 L 3/02<br>B 67 D 5/08 |
| A | AT - B - 105 022 (SIEMENS)<br>* Gesamt *<br><br>-- | 1 | |
| A | DE - A1 - 3 239 820 (RICKI)<br>* Zusammenfassung; Fig. 1 *<br><br>-- | 1 | |
| A | DE - C - 907 262 (FEIX)<br>* Fig. 1 *<br><br>-- | 1 | |
| A | US - A - 4 285 445 (VANDER MOLEN)<br>* Spalte 4, Zeilen 7-10; Fig. 2,4 *<br><br>---- | 1,2 | **RECHERCHIERTE SACHGEBIETE (Int. Cl.4)**<br><br>G 01 F 25/00<br>B 01 L 3/00<br>B 67 D 5/00 |

Der vorliegende Recherchenbericht wurde für alle Patentansprüche erstellt.

| Recherchenort | Abschlußdatum der Recherche | Prüfer |
|---|---|---|
| WIEN | 23-05-1986 | BURGHARDT |